(19) Europäisches Patentamt
European Patent Office
Office européen des brevets

(11) **EP 2 042 886 A2**

(12) **EUROPEAN PATENT APPLICATION**

(43) Date of publication:
**01.04.2009 Bulletin 2009/14**

(21) Application number: **08164007.0**

(22) Date of filing: **09.09.2008**

(51) Int Cl.:
*G01S 13/22* (2006.01)  *G01S 13/24* (2006.01)
*G01S 13/56* (2006.01)  *G01S 13/58* (2006.01)
*G01S 13/62* (2006.01)  *G01S 13/93* (2006.01)
*H01Q 21/24* (2006.01)  *G01S 13/524* (2006.01)
*G01S 13/36* (2006.01)

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **14.09.2007 US 972485 P**
**18.04.2008 US 105980**

(71) Applicant: **Honeywell International Inc.**
**Morristown, NJ 07962 (US)**

(72) Inventors:
• **Wu, XiaoDong**
c/o Honeywell International Inc.
**Morristown, NJ 07962-2245 (US)**

• **Vacanti, David C.**
c/o Honeywell International Inc.
**Morristown, NJ 07962-2245 (US)**
• **Le, Qua Van**
c/o Honeywell International Inc.
**Morristown, NJ 07962-2245 (US)**

(74) Representative: **Buckley, Guy Julian**
**Patent Outsourcing Limited**
**1 King Street**
**Bakewell**
**Derbyshire DE45 1DZ (GB)**

(54) **Radio frequency proximity sensor and sensor system**

(57)    A proximity sensor may be used as part of a vehicle blind spot detection system. The sensor is configured to transmit multiple radio frequency (RF) signals of different frequencies, receive reflected RF signals, and supply intermediate frequency (IF) signals. Each IF signal is representative of one of the reflected RF signals, and each reflected RF signal corresponds to a transmitted RF signal that was reflected by an object within the sensor detection region. The sensor uses the IF signals to determine whether an object is within its detection region and its movement direction.

FIG. 1

EP 2 042 886 A2

## Description

### CROSS-REFERENCE TO RELATED APPLICATION

This application claims the benefit of U.S. Provisional Application Serial No. 60/972,485, filed September 14, 2007.

### TECHNICAL FIELD

The present invention generally relates to proximity sensors and, more particularly, to a radio frequency (RF) proximity sensor that may be used for sensing objects in a vehicle blind spot.

### BACKGROUND

Many automotive vehicles are configured such that there are regions around the vehicle where objects, which may be near the vehicle, may be difficult for the vehicle operator to see. These regions are typically referred to as "blind spots." The specific locations of a vehicle's blind spots may vary depending, for example, on vehicle model and vehicle operator. Typical blind spot locations, however, include regions to the left and right of the vehicle operator that extend toward the rear of the vehicle, and the rear of the vehicle. No matter the specific location and size of a specific vehicle's blind spots, the blind spots may increase the likelihood for vehicle incursion into an object that is in a vehicle's blind spot.

Various solutions have been proposed to either reduce the size of vehicle blind spots or increase the ability to detect objects in a vehicle blind spot. One solution includes supply vehicles with variously shaped mirrors, such as concave mirrors, disposed in various locations on the vehicle. Another solution includes mounting one or more cameras on the vehicle. The one or more cameras supply visual images of obstacles in a vehicle's blind spots to the vehicle operator. Yet another solution that has been proposed is the use of vehicle mounted radar detection systems to detect obstacles in a vehicle's blind spots, and supply information, such as a warning signal, to the vehicle operator. One such system uses the relative phase shift between two signals of different frequencies to detect the presence of and distance to objects in a vehicle's blind spots.

While generally useful as operator aids to observe and/or detect objects within a vehicle's blind spots, each of the above-noted solutions do exhibit certain drawbacks. For example, mirrors may exhibit reduced effectiveness at night and under adverse weather conditions. Camera-based systems can be relatively complex and expensive, relying on the use of a video camera and video monitor. Further, a video monitor can be distracting and/or can present a relatively complex image that may be difficult for a vehicle operator to interpret and such monitors can be distracting. Moreover, camera-based systems can also exhibit reduced effectiveness at night and under adverse weather conditions. Radar based systems that use traditional technology can be relatively complex and expensive. In addition, the above-described radar based phase detection system exhibits ambiguity for phase differences greater than 180-degrees, and the radar based systems on other vehicles can cause interference with each other, thereby reducing effectiveness and reliability.

Hence, there is a need for a vehicle blind spot detector that exhibits sufficient effectiveness at night and under adverse weather conditions, is relatively simple and/or inexpensive, and does not exhibit ambiguity and/or interfere with other detection systems. The present invention addresses one or more of these needs.

### BRIEF SUMMARY

In one embodiment, and by way of example only, a vehicle blind spot sensing system includes a plurality of blind spot detectors mounted on a vehicle and a processor. Each blind spot detector has a detection region around the vehicle, and each blind spot detector is operable to transmit three or more radio frequency (RF) signals of different frequencies, receive reflected RF signals, and supply intermediate frequency (IF) signals. Each IF signal is representative of one of the reflected RF signals, and each reflected RF signal corresponds to a transmitted RF signal that was reflected by a moving object disposed within its detection region. The processor is coupled to receive the IF signals supplied from at least one blind spot detector and is operable, upon receipt of the IF signals, to determine whether a moving object is within the detection region of the at least one blind spot detector.

In another exemplary embodiment, a proximity sensor includes a radio frequency (RF) sensor, a pulse generator, a plurality of detection channels, and a processor. The RF sensor is coupled to receive a frequency control signal and is operable, in response thereto, to generate and transmit a plurality of RF signals of different frequencies. The RF sensor is further operable to receive reflected RF signals and to supply intermediate frequency (IF) signals. Each IF signal is representative of one of the reflected RF signals, and each reflected RF signal corresponds to a transmitted RF signal that was reflected by an object moving in a direction. The pulse generator is coupled to the RF sensor and is operable to supply the frequency control signal thereto. Each detection channel is coupled to receive one of the IF signals supplied by the RF sensor and is operable to supply a digital signal representative of the IF signal. The processor is coupled to receive the digital signal supplied from each of the detection channels and is operable, upon receipt thereof, to determine a distance to, and the direction of, the moving object that reflected the transmitted RF signal.

In yet another exemplary embodiment, a method of detecting the presence of and distance to an object moving in a movement direction includes transmitting three or more radio frequency (RF) signals of different frequencies. Reflected RF signals that correspond to the transmitted RF signals that were reflected by a moving object are received. The relative phase angles between two or more sets of reflected RF signals are determined, and the distance to and the movement direction of the object is determined from the determined relative phase angles.

BRIEF DESCRIPTION OF THE DRAWINGS

The present invention will hereinafter be described in conjunction with the following drawing figures, wherein like numerals denote like elements, and wherein:

FIG. 1 is a diagram depicting an exemplary vehicle on a driving surface and various regions around the vehicle;

FIG. 2 depicts a functional block diagram of an exemplary embodiment radio frequency proximity sensor that may be mounted on the vehicle of FIG. 1;

FIG. 3 is a functional block diagram of an exemplary embodiment of a radio frequency sensor that may be used to implement the proximity sensor of FIG. 2;

FIG. 4 is a functional block diagram another exemplary embodiment of a radio frequency sensor that may be used to implement the proximity sensor of FIG. 2;

FIG.5 depicts an exemplary timing diagram of various signals generated in the blind spot detector of FIG. 2;

FIG. 6 graphically depicts the multi-frequency ranging detection capabilities of the exemplary blind spot detector of FIG. 2; and

FIG. 7 depicts, in simplified form, exemplary E-fields radiated by a blind spot detector of FIG. 2; and

FIGS. 8 and 9 depict, in simplified form, exemplary E-fields radiated by a blind spot detector on vehicles moving in the same direction and opposite directions, respectively.

DETAILED DESCRIPTION

The following detailed description is merely exemplary in nature and is not intended to limit the invention or the application and uses of the invention. Furthermore, there is no intention to be bound by any theory presented in the preceding background or the following detailed description. In this regard, although embodiments of an inventive sensor are described as being implemented in an automobile blind spot detection system, it will be appreciated that the sensor may be implemented in numerous other systems and environments. For example, the sensor may be used to detect the presence of objects near residential, commercial, governmental, or military buildings or other facilities. Moreover, as used herein the term "object" or "objects" may refer to both animate and inanimate objects.

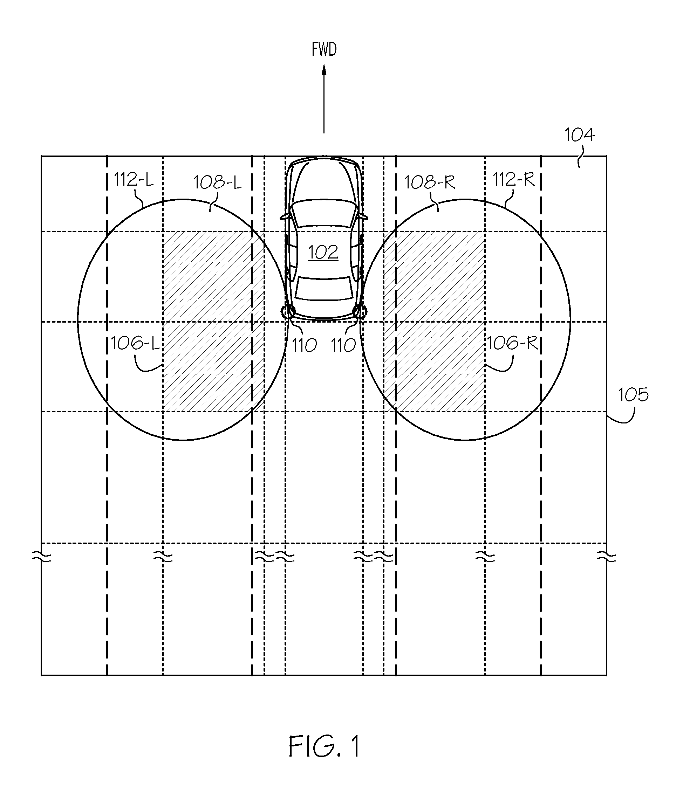

Referring now to FIG. 1, an exemplary vehicle 102 is depicted on a driving surface 104. Various regions are also graphically depicted in FIG. 1. These regions include a plurality of operator warning regions 106 (e.g., 106-L, 106-R), a plurality of potential operator warning regions 108 (e.g., 108-L, 108-R), and a plurality of detection regions 112 (e.g., 112-L, 112-R). The operator warning regions 106 represent regions which, if a moving object is detected within either region 106-L, 106-R, it is desired that a warning be supplied to a vehicle operator. The potential operator warning regions 108 represent regions for which, if a moving object is detected within either region 108-L, 108-R, a warning may, if so desired, be supplied to a vehicle operator. The detection regions 112 represent the detection capabilities of the vehicle blind spot detectors 110. In the depicted embodiment, the vehicle 102 includes a plurality of blind spot detectors 110 to detect objects within the detection regions 112. More specifically, vehicle 102 is preferably equipped with a left-side blind spot detector 110-L and a right-side blind spot sensor 110-R. Although one blind spot detector 110 per side is depicted, it will be appreciated that a vehicle 102 could be equipped with a plurality of left-side and right-side blind spot detectors 110-L, 110-R.

Before proceeding further, it is noted that the potential operator warning regions 108 could be larger or smaller than what is depicted in FIG. 1. Indeed, in some embodiments the warning regions could extend to the borders 105 of FIG. 1. The extent of the potential warning regions 108 are, of course, limited by the extent of the detection regions 112, which are in turn limited by the detection range of the vehicle blind spot detectors 110, embodiments of which will now be described.

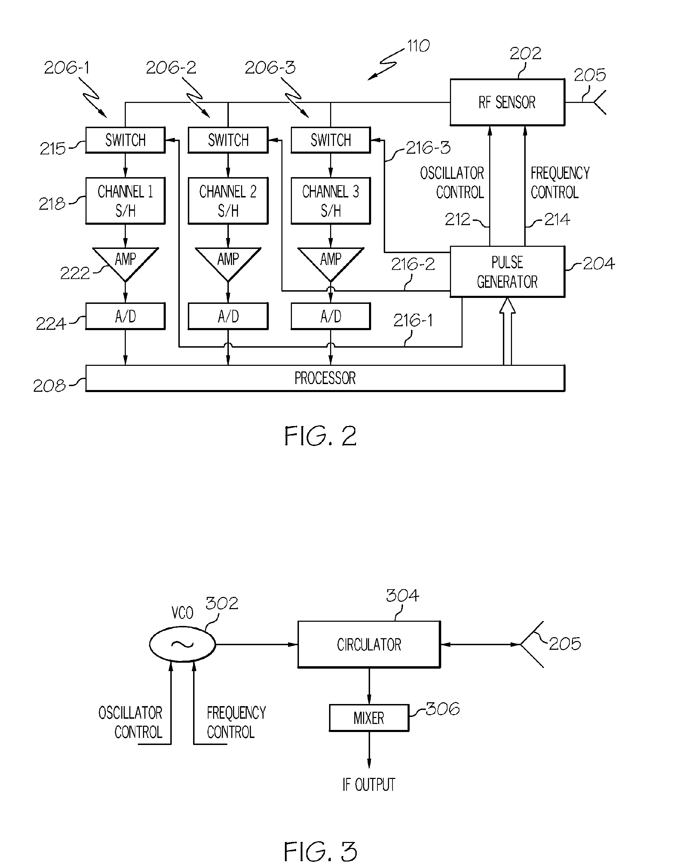

Turning now to FIG. 2, a functional block diagram of an exemplary embodiment of one of the blind spot detectors 110 is depicted. The depicted blind spot detector 110 is a radio frequency (RF) proximity sensor that includes an RF sensor 202, a pulse generator 204, a plurality of detection channels 206 (e.g., 206-1, 206-2, 206-3), and a processor 208. Before describing the blind spot detector/RF proximity sensor 110 in more detail, it is once again noted that although the sensor 110 is described in the context of an automobile blind spot detection system, it may be used in numerous and varied systems and environments, and for numerous and varied functions.

The RF sensor 202 is configured to transmit radio frequency (RF) signals and receive the RF signals reflected by moving objects within its detection region 112, via one or more antennae 205. The RF sensor 202 may be configured to transmit and receive RF signals of various frequencies. Preferably, however, the RF sensor 202 is configured to transmit and receive RF frequencies in the microwave frequency spectrum. The RF sensor 202 is also preferably configured to transmit and receive multi-frequency RF signals. That is, the RF sensor 202 does not just transmit and receive RF signals of the same frequency. Rather, the RF sensor 202 transmits and receives RF signals, which include Doppler information, of different frequencies. The RF sensor 202, upon receipt of the reflected RF signals, combines the transmitted and reflected RF signals to generate and supply Doppler IF (intermediate frequency) signals of different frequencies to the detection channels 206. In the depicted embodiment, the RF sensor 202 is configured to transmit and receive RF signals of three different frequencies (F1, F2, F3). The reasons for this are discussed further below. It will be appreciated that the RF sensor 202 could be configured to transmit and receive RF signals of more than this number of different frequencies. Preferably, however, the number of different frequencies equals the number of detection channels 206.

The RF frequency of the signals that the RF sensor 202 transmits and receives is controlled, at least in part, by the pulse generator 204. The pulse generator 204 is coupled to, and supplies a plurality of control signals to, the RF sensor 202. The control signals control the operation and frequency of a non-illustrated oscillator (described below) within the RF sensor 202 that generates the RF signals. Thus, in the depicted embodiment, the control signals include an oscillator control signal 212 and a frequency control signal 214. The oscillator control signal 212 turns the RF sensor oscillator on and off, and the frequency control signal 214 controls the frequency of the oscillator. The pulse generator 204 also supplies channel enable signals 216 (e.g., 216-1, 216-2, 216-3) to each of the detection channels 206. The channel enable signals 216 selectively enable and disable the detection channels 206.

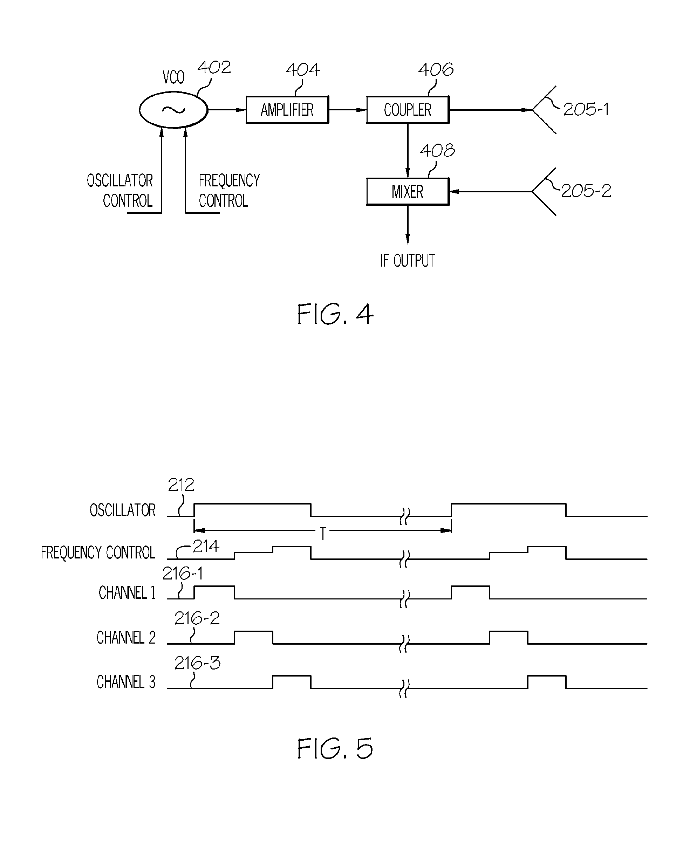

Before describing the detection channels 206, it is noted that the RF sensor 202 may be implemented using any one of numerous suitable devices and circuit configurations. One particular circuit configuration, which is depicted in FIG. 3, includes a voltage controlled oscillator (VCO) 302, a circulator 304, and a mixer 306. Yet another exemplary configuration, which is depicted in FIG. 4, includes a VCO 402, an optional amplifier 404, a coupler 406, and a mixer 408. It may be seen that with the configuration of FIG. 3, the RF sensor 202 includes only a single antenna 205, whereas with the configuration of FIG. 4, the RF sensor 202 includes two antennae - a transmit antenna 205-1 and a receive antenna 205-2.

The detection channels 206 are each configured to process the IF signals supplied from the RF sensor 202. More specifically, each detection channel 206 is configured to process Doppler IF signals of that correspond to different RF frequencies. Thus, the blind spot detector 110 includes three detection channels 206-1, 206-2, 206-3. It will be appreciated, however, that if the RF sensor 202 and pulse generator 204 were configured to enable transmission and receipt of more than three different RF frequencies, the blind spot detector 110 could include more than this number of detection channels 206. In any case, each detection channel 206 includes a switch circuit 215, a sample-and-hold (S/H) circuit 218, an amplifier circuit 222, and an analog-to-digital converter (A/D) circuit 224. The switch circuit 215 is responsive to the channel enable signal 216 that is supplied thereto from the pulse generator 204 to selectively supply IF signals that correspond to the appropriate RF frequency to the S/H circuit 218.

The S/H circuit 218 receives the IF signals selectively supplied from the switch circuit 215 and, implementing a known functionality, supplies sampled IF signals to the amplifier circuit 222. The amplifier circuit 222 is configured to implement suitable signal conditioning of the sampled IF signals, and supplies conditioned, sampled IF signals to the A/D circuit 224. The A/D circuit 224 converts the conditioned, sampled IF signals it receives to digital signals, and supplies digital signals representative of the IF signals to the processor 208. It will be appreciated that in some embodiments the amplifier circuit 222 may be replaced with an automatic gain control (AGC) circuit.

The processor 208 is coupled to receive the digital signals from each of the detection channels 206, and appropriately processes the signals. The processor 208, among other things, determines whether a moving object is within the detection region 112 and, if so, the movement direction of the object and whether the detected object is within one of the operator warning regions 106 or one of the potential operator warning regions 108. The processor 208, based on this latter determination, may then supply one or more appropriate signals to external equipment to generate and issue appropriate warnings. The warnings issued by the non-illustrated external equipment may include, for example, illumination of a light, an audible sound, or both. In some embodiments, the processor 208 may also be in operable communication with various other non-illustrated vehicle systems to warn a driver of potentially undesirable vehicular movement. For example, the processor 208 may be in operable communication with a suitable vehicle steering sensor, a turn signal, or the like.

As FIG. 2 also depicts, the processor preferably controls the overall operation of the pulse generator 204. In this regard, it will be appreciated that the functions of the pulse generator 204 could, if needed or desired, be implemented by the processor 208. It will additionally be appreciated that the processor 208 may be implemented using any one of numerous suitable devices, or combinations of devices, including any one of numerous general purpose microprocessors, applications specific integrated circuits (ASICs), discrete logic components, or digital signal processors (DSPs), just to name a few.

Turning now to FIG. 5, an exemplary timing diagram of the various signals supplied by the pulse generator 204 are depicted. As FIG. 5 clearly depicts, the signals are all preferably synchronized, and the voltage magnitude of the frequency control signal 214 incrementally increases from low to high. It will be appreciated that the frequency control signal 214 may be implemented using other pulse shapes. Moreover, while not illustrated in FIG. 5, it will be appreciated that in the preferred embodiment the duty cycle (T) of the oscillator control signal 212 is randomly varied within a predetermined range.

This significantly reduces the likelihood that another blind spot detector 110 on another vehicle will be turned on at the same time.

It was noted above that current radar-based blind spot detection systems exhibit phase angle ambiguities, and may interfere with similar radar-based systems on other vehicles. The blind spot detector 110 described herein overcomes the phase angle ambiguity by implementing multi-frequency ranging capabilities, and overcomes the interference issue, in addition to the above-mentioned random pulse generation, by the configuration of the one or more antennae 205. The configuration of the one or more antennae 205 is described in more detail further below. However, as will now be described in greater detail, phase angle ambiguity is eliminated by configuring the RF sensor 202 to transmit and receive three different frequencies.

In the preferred embodiment, the three frequencies (F1, F2, F3) transmitted by the RF sensor 202 differ only slightly. That is, F2=F1+Δ1 and F3=F1+Δ2, where Δ1<<F1 and Δ2<<F1. As a result, the associated Doppler frequency shifts resulting from reflections by a moving target differ only slightly, and distance (R) from the RF sensor 202 to a moving target can be determined from the phase difference among the three associated Doppler IF signals as follows:

$$R = \frac{c \, | \, \Delta\phi \, |}{4\pi\Delta N},$$

where R is the target distance in meters from the RF sensor 202, c is the speed of light in meters per second ($3\times10^8$), ΔN is the frequency difference between F1 and F2 or F1 and F3, and Δφ is the phase difference (in radians) between the respective Doppler IF signals (e.g., IF1 and IF2 or IF1 and IF3). Although the magnitude of the phase difference (Δφ) is used in the above equation, it is noted that the sign (+/-) of the phase difference (Δφ) can be used to determine the movement direction of the moving target that reflected the transmitted signals.

As an illustrative example of the use of the above described equation, it is assumed that the RF sensor 202 is configured such that the first and second frequencies (F1, F2) it transmits differ by 3 MHz (e.g., Δ1=F2-F1=3 MHz), and the first and third frequencies (F1, F3) it transmits differ by 5 MHz (e.g., Δ2=F2-F1=5 MHz). Moreover, using the first detection channel 206-1 as a reference, the phases of the Doppler IF signals resulting from reflections by a moving target are $\phi1 = 0°, \phi2 = 36^0$ and $\phi3 = 60^0$. When these values are plugged into the above equation, the range (R) to the target is computed to be 5 meters. Because the phase differences are positive, this indicates that the target is and moving toward the RF sensor 202. It should be noted that if the resultant three Doppler IF signal phases were $\phi1 = 0^0, \phi2 = -36^0$ and $\phi3 = -60^0$, then the computed range (R) would also be 5 meters. However, because the phase differences are negative, this would indicate that the target is moving away from the RF sensor 202.

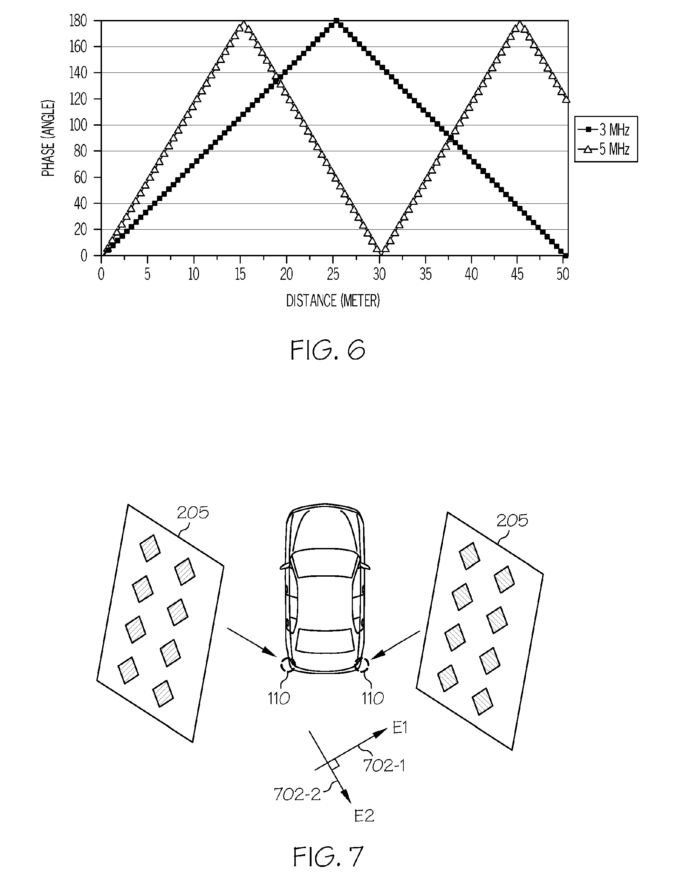

With reference to FIG. 6, the manner in which the system avoids range ambiguities caused by phase ambiguities is depicted graphically. In particular, it is seen that if the system transmitted signals at only the first and second frequencies (F1, F2), then reflection by a single target would occur with a 3 MHz frequency difference. Moreover, the phase difference of the associated Doppler IF signals (IF1, IF2) could be a 36 degree phase delay or a 324 degree phase advance. As a result, the computed range would be either 5 meters (for a 36 degree phase difference) or 45 meters (for a 324 degree phase difference), creating a range ambiguity. However, because the system transmits a third frequency (F3) that produces a difference of 5 MHz, the phase difference of the associated Doppler IF signals (IF1 and IF3) could be either a 60 degree phase delay or a 300 degree phase advance. These two phase angles, for the associated 5 MHz frequency difference, correspond to a computed range of 5 meters (for a 60 degree phase difference) or 25 meters (for a 300 degree difference). Because the common range between the frequency pairs (e.g., F1, F2 and F1, F3) is 5 meters, the ambiguous values of 25 meters and 45 meters may be eliminated.

The one or more antennae 205 associated with each blind spot detector 110 may be variously configured and implemented. However, as FIG. 7 depicts, the one or more antennae 205 are preferably configured as 45-degree linear polarized antennas. Furthermore, although the one or more antennae 205 in the depicted embodiment are 2 X 4 patch arrays, it will be appreciated that each antenna 205 could also be implemented using a 1 X 4 patch array, a 2 X 2 patch array, or variously dimensioned patch arrays. The one or more antennae 205 could also be implemented using any one of numerous other antenna types including, for example, a slot array or a horn antenna, just to name a few.

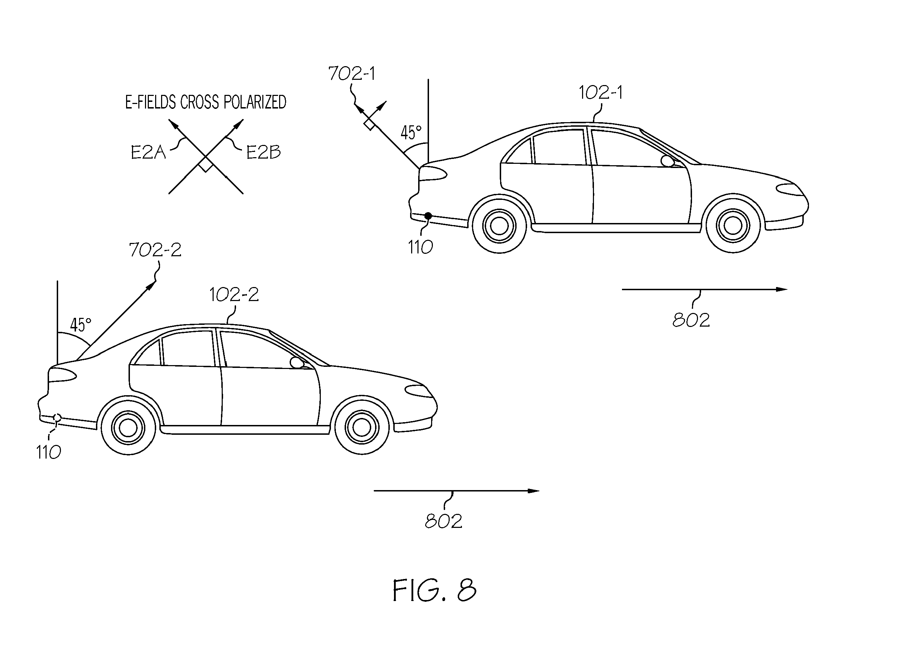

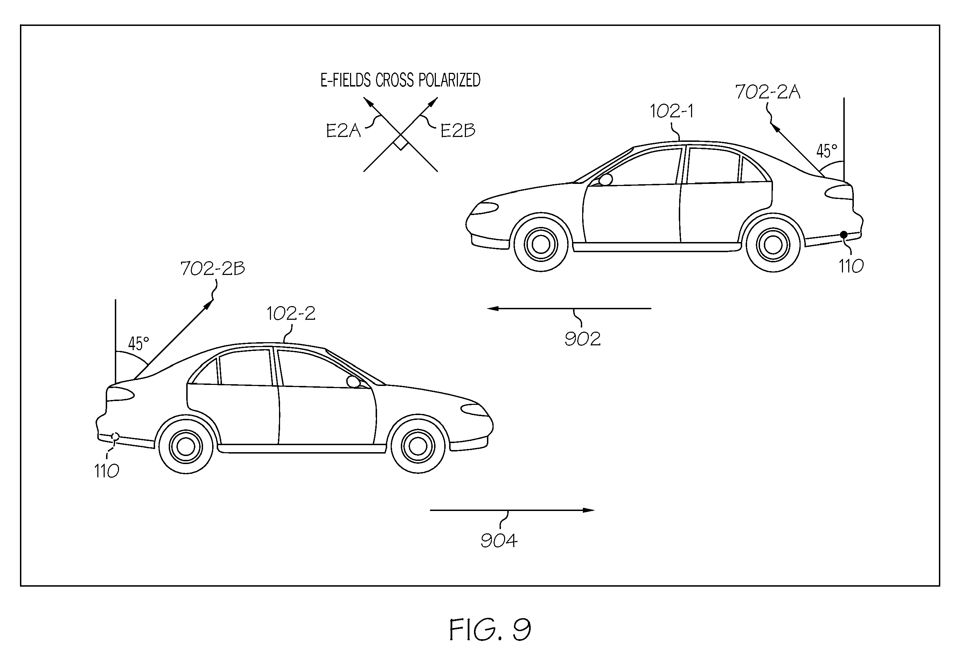

The blind spot detector 110 described herein does not suffer from the previously mentioned interference issues due, at least in part, to the above-described configuration of the one or more antennae 205. In particular, and as shown more clearly in FIGS. 8 and 9, the E-fields 702-1, 702-2 radiated by blind spot detectors 110 on vehicles 102 moving in either the same direction (FIG. 8) or opposite directions (FIG. 9) are perpendicular to each other. As a result, RF interference between the blind spot detectors 110 is eliminated, or at least substantially reduced. For clarity and ease of understanding, it is noted that FIG. 8 depicts a side view of two vehicles 102-1, 102-2, and both vehicles are moving in the same direction 802. Moreover, FIG. 9 depicts a side view of one vehicle 102-1 that is moving in one direction 902, and another vehicle 102-2 that is moving in an opposition direction 904.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention.

**Claims**

1. A vehicle blind spot sensing system, comprising:

    a plurality of blind spot detectors (110) mounted on a vehicle (102), each blind spot detector (110) having a detection region (112) around the vehicle (102), each blind spot detector (110) operable to (i) transmit three or more radio frequency (RF) signals of different frequencies, (ii) receive reflected RF signals, and (iii) supply intermediate frequency (IF) signals, each IF signal representative of one of the reflected RF signals, and each reflected RF signal corresponding to a transmitted RF signal that was reflected by a moving object disposed within its detection region (112); and
    a processor (208) coupled to receive the IF signals supplied from at least one blind spot detector (110) and operable, upon receipt of the IF signals, to determine whether a moving object is within the detection region (112) of the at least one blind spot detector (110).

2. The system of Claim 1, wherein the IF signals supplied to the processor (208) are digital IF signals, and wherein each blind spot detector (110) comprises:

    a radio frequency (RF) sensor (202) coupled to receive a frequency control signal (214) and operable, in response thereto, to generate and transmit the three or more RF signals of different frequencies, the RF sensor (202) further operable to receive the reflected RF signals and supply analog intermediate frequency (IF) signals, each analog IF signal representative of one of the reflected RF signals;
    a pulse generator (204) coupled to the RF sensor (202) and operable to supply the frequency control signal (214) thereto; and
    a plurality of detection channels (206), each detection channel (206) coupled to receive one of the analog IF signals supplied by the RF sensor (202) and operable to supply one of the digital IF signals.

3. The system of Claim 1, wherein:

    the pulse generator (204) is further operable to supply an oscillator control signal (212) to the RF sensor (202); and
    the RF sensor (202) is responsive to the oscillator control signal (212) to generate the three or more RF signals.

4. The system of Claim 3, wherein:

    the oscillator control signal (212) has a duty cycle; and
    the pulse generator (204) is further operable to randomly vary the duty cycle of the oscillator control signal (212).

5. The system of Claim 1, further comprising:

    a plurality of 45-degree polarized antennae, each antenna coupled to one of the blind spot detectors (110).

6. The system of Claim 1, wherein processor (208) is further operable, upon receipt of the IF signals, to determine a distance from the at least one blind spot detector (110) to the object.

7. The system of Claim 6, wherein the processor (208) determines the distance to and movement direction of the object from relative phase angles of the IF signals.

8. The system of Claim 7, wherein the processor (208) is further operable, based on the determined distance to the object, to selectively generate one or more warning signals.

9. A proximity sensor (110), comprising:

    a radio frequency (RF) sensor (202) coupled to receive a frequency control signal (214) and operable, in response thereto, to generate and transmit a plurality of RF signals of different frequencies, the RF sensor (202) further operable to receive reflected RF signals and supply intermediate frequency (IF) signals, each IF signal representative of one of the reflected RF signals, and each reflected RF signal corresponding to a transmitted RF signal that was reflected by a moving object;
    a pulse generator (204) coupled to the RF sensor (202) and operable to supply the frequency control signal (214) thereto;
    a plurality of detection channels (206), each detection channel (206) coupled to receive one of the IF signals supplied by the RF sensor (202) and operable to supply a digital signal representative of the IF signal; and
a processor (208) coupled to receive the digital signal supplied from each of the detection channels (206) and operable, upon receipt thereof, to determine a distance to and movement direction (802) of the moving object that reflected the transmitted RF signal.

10. A method of detecting the presence of and distance to an object, comprising the steps of:

transmitting three or more radio frequency (RF) signals of different frequencies;
receiving reflected RF signals, each reflected RF signal corresponding to a transmitted RF signal that was reflected by an object; and
determining relative phase angles between two or more sets of reflected RF signals; and
determining the distance to and movement direction of the object from the determined relative phase angles.

FIG. 1

206-1    206-2    206-3    110    202    205

RF SENSOR

215 ─ SWITCH    SWITCH    SWITCH ─ 216-3

OSCILLATOR
CONTROL

FREQUENCY
CONTROL

218 ─ CHANNEL 1
S/H    CHANNEL 2
S/H    CHANNEL 3
S/H

212    214

222 ─ AMP    AMP    AMP    216-2    PULSE
GENERATOR ─ 204

224 ─ A/D    A/D    A/D    216-1

208 ─ PROCESSOR

FIG. 2

VCO    302    304

CIRCULATOR    ─205

OSCILLATOR
CONTROL    FREQUENCY
CONTROL    MIXER ─ 306

IF OUTPUT

FIG. 3

FIG. 4

FIG. 5

FIG. 6

FIG. 7

E-FIELDS CROSS POLARIZED

E2A    E2B

702-1

102-1

45°

110

802

702-2

102-2

45°

110

802

FIG. 8

EP 2 042 886 A2

FIG. 9

**EP 2 042 886 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 97248507 P